# EUROPÄISCHE PATENTSCHRIFT

(11) **EP 0 636 217 B1**
(45) Veröffentlichungstag und Bekanntmachung des Hinweises auf die Patenterteilung: **04.12.1996**
(21) Anmeldenummer: 93907791.3
(22) Anmeldetag: 06.04.1993
(51) Int. Cl.: F16D 65/12

(54) **VERFAHREN ZUM HERSTELLEN EINER BREMSSCHEIBE FÜR EINE SCHEIBENBREMSE**
PROCESS FOR PRODUCING A BRAKE DISC FOR A DISC BRAKE
PROCEDE DE FABRICATION D'UN DISQUE DE FREIN POUR UN FREIN A DISQUE

(30) Priorität: 13.04.1992 DE 4212351; 05.02.1993 DE 4303418
(43) Veröffentlichungstag der Anmeldung: 01.02.1995
(73) Patentinhaber: KNORR-BREMSE SYSTEME FÜR NUTZFAHRZEUGE GmbH, 80809 München (DE)
(72) Erfinder: BAUMGARTNER, Hans, D-8052 Moosburg (DE); BIEKER, Dieter, D-8000 München 82 (DE)
(74) Vertreter: KUHNEN, WACKER & PARTNER
(86) Internationale Anmeldenummer: DE9300326
(87) Internationale Veröffentlichungsnummer: WO9321453

(56) Entgegenhaltungen:
- EP-A- 0 166 879
- WO-A-89/05925
- WO-A-92/05369
- DE-A- 2 950 057
- DE-A- 3 012 420
- DE-C- 3 942 651
- US-A- 4 512 450

## Beschreibung

Die Erfindung bezieht sich auf ein Verfahren zum Herstellen einer Bremsscheibe für eine Scheibenbremse, die insbesondere für Straßenfahrzeuge und vorzugsweise für Nutzfahrzeuge vorgesehen ist. Gegenstand der Erfindung ist ferner eine nach der Lehre der Erfindung hergestellte Bremsscheibe sowie eine besondere Art der Befestigung einer derartigen Bremsscheibe an der Nabe des Fahrzeugs.

Bislang für Straßen-Nutzfahrzeuge vorgesehene Bremsscheiben sind einstückig, so daß sie entsprechend einfach und kostengünstig durch Gießen und anschließendes Plandrehen ihrer Kontaktflächen für die Bremsbeläge hergestellt werden können. Ein Nachteil dieser bekannten Bremsscheiben liegt jedoch darin, daß der nach zu großem Verschleiß der Kontaktflächen erforderlich werdende Austausch mit einer kompletten Demontage der Radnabe verbunden ist, was sehr zeitintensiv ist und entsprechend hohe Lohnkosten hervorruft. Darüberhinaus müssen bei der Demontage der Radnabe deren Lagergehäuse geöffnet werden, so daß diese einer hohen Verschmutzungsgefahr ausgesetzt sind und daher gegebenenfalls gereinigt und mit neuem Schmierstoff befüllt werden müssen, wodurch die Wartungskosten für den Austausch der Bremsscheibe weiter erhöht werden.

Aus der EP-A-0 166 879 ist es bekannt, für Schienenfahrzeuge Bremsscheiben zu verwenden, die aus zwei halbkreisförmigen Teilen bestehen und zur Montage an der Achse des betreffenden Schienenfahrzeugs aneinander befestigt werden. Bei derartigen Schienenfahrzeugen sind die Laufräder nämlich auf die Achse fest aufgeschrumpft, so daß für den Ersatz vorgesehene Bremsscheiben nicht einstückig sein dürfen. Lediglich die erste Garnitur der Bremsscheiben einer jeden Achse besteht aus einer einstückigen, mittels eines Schrumpfvorgangs befestigten Bremsscheibe, die nach ihrem Verschleiß beispielsweise mittels einer Trennscheibe von der Achse entfernt wird. Ein Nachteil der bekannten zweistückigen Bremsscheiben für Schienenfahrzeuge liegt in ihren hohen Herstellungskosten: zunächst wird nämlich jede der beiden Hälften der Bremsscheibe separat hergestellt, worauf die beiden Stoßflächen unter Zuhilfenahme von Zentrierungen über Paßstifte oder Paßbuchsen möglichst genau aneinander angepaßt werden, um zu gewährleisten, daß der Stoß der beiden Hälften so eben wie möglich verläuft und keinen übermäßigen Belagverschleiß der Bremsbeläge hervorruft.

Untersuchungen haben jedoch gezeigt, daß die bei den bekannten zweiteiligen Bremsscheiben für Schienenfahrzeuge dennoch auftretenden Unebenheiten am Stoß noch so groß sind, daß eine Verwendung derartiger Bremsscheiben für Straßenfahrzeuge zu nicht akzeptablen Verschleißwerten der Bremsbeläge führt. Darüberhinaus sind auch die Mehrkosten für die Herstellung derartiger Bremsscheiben so hoch, daß die vereinfachten Wartungsarbeiten beim Austausch der Bremsscheiben hierdurch kaum kompensiert werden.

Der Erfindung liegt die Aufgabe zugrunde, ein Verfahren zur Herstellung einer Bremsscheibe anzugeben, das trotz günstiger Herstellungskosten einen wesentlich vereinfachten Austausch der Bremsscheibe gestattet, wobei die Bremsscheibe im Betrieb keinen erhöhten Verschleiß der Bremsbeläge hervorrufen soll.

Diese Aufgabe wird erfindungsgemäß mit den im Kennzeichnungsteil des Anspruchs 1 angegebenen Verfahrensschritten gelöst.

Erfindungsgemäß ist demzufolge vorgesehen, in einer herkömmlichen einstückigen Bremsscheibe zwei Trennzonen vorzusehen, welche die Bremsscheibe in zwei Teile unterteilen, anschließend in jeder Trennzone eine diese übergreifende Befestigungsvorrichtung auszubilden und schließlich die Bremsscheibe in den Trennzonen in die zwei halbkreisförmigen Teile auseinanderzubrechen. Dieses Verfahren ist äußerst kostengünstig durchzuführen, so daß die Bremsscheibe entsprechend billig hergestellt werden kann und dementsprechend kaum mehr kostet als eine herkömmliche Bremsscheibe. Durch die Zweiteiligkeit der Bremsscheibe wird indes der Austausch einer verschlissenen Bremsscheibe gegen eine neue Bremsscheibe wesentlich vereinfacht, so daß Wartungsarbeiten an der Bremse schneller und billiger durchzuführen sind.

Dadurch, daß die zwei Teile der Bremsscheibe durch einen Brechvorgang gebildet werden, wird schließlich ferner erreicht, daß das körnige Bruchgefüge beim Zusammenfügen eine nahezu ideale Fixierung der beiden Teile ermöglicht, so daß keinerlei Stoß an den ringförmigen Kontaktflächen auftritt; die Beläge der Bremsbakken reiben daher auf einer sehr gleichmäßigen Oberfläche und zeigen somit keinen erhöhten Verschleiß.

Gemäß der im Anspruch 2 angegebenen Weiterbildung der Erfindung wird innerhalb jeder Trennzone vorzugsweise eine Sollbruchstelle ausgebildet, beispielsweise durch eine entsprechende Materialaussparung beim Guß der Bremsscheibe, wodurch ein sehr sicheres und genaues Brechen der Bremsscheibe in ihre zwei Teile gewährleistet ist.

Gemäß Anspruch 3 kann der Bruchvorgang ggf. dadurch erleichtert werden, daß die Bremsscheibe zum Brechen unterkühlt wird, wobei die dann erhöhte Sprödigkeit weniger Kraftaufwand erforderlich macht und u.U. eine noch höhere Genauigkeit des Bruchgefüges erzielen läßt.

Geeignete Befestigungsvorrichtungen können nach Anspruch 4 z.B. durch mindestens zwei radial gegenüberliegende, tangential und senkrecht zur jeweiligen Trennzone verlaufende Bohrungen mit Innengewinde für eine Schraubverbindung gebildet werden.

Gemäß Anspruch 5 wird der Verlauf der beiden Trennzonen im einfachsten Fall so gewählt, daß die beiden Trennzonen derart einander diametral gegenüberliegend angeordnet sind, daß zwei im wesentlichen gleich große halbringkreisförmige Bremsscheibenteile gebildet werden. Diese symmetrische Anordnung der Trennzonen bietet ggf. Vorteile beim eigentlichen Brechvorgang.

Jedoch ist es gemäß der im Anspruch 6 angegebenen besonderen Fortbildung der Erfindung anzustreben, die beiden Trennzonen parallel zueinander, jedoch unter gegenseitigem Versatz gegenüberliegend anzuordnen, so daß zwei im wesentlichen gleich große Bremsscheibenteile gebildet werden, deren Kontaktbereiche jedoch nicht auf der Durchmesserlinie verlaufen. Dieser gegenseitige Versatz der Trennzonen, d.h. der Bruchebenen, hat nämlich zur Folge, daß der Schwerpunkt jedes einzelnen Bremsscheibenteils so gegen diese Bruchebene einwirkt, daß ein beträchtlicher Teil der Fliehkräfte von der Verzahnung der Bruchstruktur, d.h. dem Bruchgefüge, aufgenommen wird. Durch diesen Effekt werden die vorzugsweise durch Schrauben gebildeten Befestigungsvorrichtungen von der Fliehkraftbeanspruchung entsprechend entlastet. Demgemäß ist es möglich, diese Schrauben ggf. kleiner zu dimensionieren, was die Herstellungskosten entsprechend senkt.

Wenn die erfindungsgemäße Bremsscheibe in ihrem zentralen Bereich einen Anflanschring zum Anflanschen der Bremsscheibe an eine Nabe aufweist, empfiehlt es sich nach Anspruch 8, im Anflanschring ausgehend von der Stelle, an der eine jeweilige Trennzone auftrifft, bis zum Innenrand des Anflanschrings eine Ausnehmung auszubilden. Hierdurch wird das Brechen der Bremsscheibe ggf. beträchtlich vereinfacht, zumal der Anflanschring meist über ein nabenförmiges Anschlußstück mit den Kontaktflächen der Scheibe verbunden ist.

Gemäß einem weiteren, wesentlichen Aspekt der Erfindung soll für eine nach dem oben genannten Verfahren hergestellte Bremsscheibe, jedoch nicht ausschließlich für eine solche, sondern ggf. auch für eine herkömmliche "einteilige" Scheibenbremse, eine besonders wirksame Art der Befestigung an der Nabe des Fahrzeugs angegeben werden: Ein wesentliches Problem bei der Befestigung einer Bremsscheibe an der Nabe liegt nämlich darin, daß das beim Bremsen auftretende Bremsmoment im wesentlichen über Reibschluß auf die Nabe übertragen wird. Um diesen Reibschluß stets ausreichend hoch zu halten, ist es erforderlich, entweder entsprechend großdimensionierte Schrauben oder eine Vielzahl kleinerer Schrauben zu verwenden. Dies führt einerseits zu Gewichtsproblemen und kann andererseits erhebliche Platzprobleme bei der Montage nach sich ziehen. Darüberhinaus werden die Montagekosten bei Verwendung einer Vielzahl von Schrauben durch den erhöhten Zeitaufwand entsprechend vergrößert.

Zur Beseitigung dieser Nachteile schlägt die Erfindung daher gemäß Anspruch 15 vor, im Anflanschring Formschlußelemente auszubilden, die mit einer zugeordneten Befestigungsfläche der Nabe in Eingriff stehen. Hierdurch wird erreicht, daß das beim Bremsen auftretende Bremsmoment im wesentlichen über Formschluß auf die Nabe übertragen wird. Somit ist es möglich, die Schrauben entsprechend kleiner zu dimensionieren oder deren Anzahl zu verringern, was aufgrund des gewichtsmäßig keine Auswirkungen aufweisenden Formschlusses zu einer dementsprechenden Gewichtseinsparung und/oder verringerten Montagekosten führt.

In besonders bevorzugter Ausführungsform wird für die erfindungsgemäßen Formschlußelemente nach der Weiterbildung des Anspruchs 16 eine im wesentlichen radial verlaufende Stirnverzahnung im Anflanschring ausgebildet, die mit einer entsprechenden Gegenverzahnung der Befestigungsfläche der Nabe in Eingriff steht. Eine derartige Verzahnung kann ausschließlich aus radial verlaufenden Zähnen gebildet sein, so daß eine sogenannte "Hirtverzahnung" vorliegt.

Alternativ zu einer derartigen Hirtverzahnung ist es jedoch insbesondere dann, wenn die Stirnverzahnung gemäß Anspruch 17 aus mehreren, entlang des Umfangs des Anflanschrings gleichmäßig verteilten Verzahnungsbereichen besteht, möglich, gemäß Anspruch 18 die Zähne innerhalb jedes Verzahnungsbereichs parallel zueinander verlaufen zu lassen; dies kann u.U. fertigungstechnische Vorteil haben.

Wenn die oben erläuterte, einen derartigen Formschluß enthaltende Bremsscheibe für die Befestigung an einer Nabe vorgesehen ist, bei der eine zur Befestigung der Felge dienende Radscheibe lösbar an einer äußeren Stirnseite der Nabe befestigt werden kann, wird erfindungsgemäß nach der Weiterbildung des Anspruchs 19 eine besonders wirksame Anordnung der Bremsscheibe dann erreicht, wenn der Anflanschring der Bremsscheibe derart ausgebildet wird, daß die Bremsscheibe zwischen der Radscheibe und der äußeren Stirnseite der Nabe befestigt werden kann. Diese Anordnung hat u.a. den Vorteil, daß selbst eine ungeteilte Bremsscheibe ohne Demontage des Radlagers bzw. der Radnabe ausgewchselt werden kann. Außerdem ergibt sich eine besonders günstige Krafteinleitung in die Nabe. Weiterhin ist es hierbei gemäß Anspruch 20 vorteilhaft, die Stirnverzahnung an der äußeren Seite des Anflanschrings auszubilden und mit einer an einer inneren Ringfläche der Radscheibe spiegelbildlich ausgebildeten Gegenverzahnung in Eingriff zu bringen.

Wenn die vorstehend erläuterte Bremsscheibe mit einem Formschluß hingegen für die Befestigung an einer Nabe vorgesehen ist, bei der die zur Befestigung der Felge dienende Radscheibe die äußere Stirnseite der Nabe bildet, läßt sich erfindungsgenäß eine besonders günstige gegenseitige Anordnung dann erzielen, wenn gemäß Anspruch 21 der Anflanschring der Bremsscheibe derart ausgebildet wird, daß die Bremsscheibe über die Stirnverzahnung an einer inneren Ringfläche der Radscheibe befestigt werden kann. Besonders vortelhaft ist es hierbei, zwischen dem Anflanschring der Bremsscheibe und der inneren Ringfläche der Radscheibe einen Zwischenring anzuordnen, wobei die beidseitigen Verzahnungen vorzugsweise zwischen dem Anflanschring der Bremsscheibe und dem Zwischenring vorgesehen werden sollten. Der Zwischenring wird bevorzugt über Paßelemente, vorzugsweise in Form von Spannhülsen oder Paßstiften, mit der inneren Ringfläche der Radscheibe verbunden.

Die Erfindung wird nachstehend anhand der Beschreibung von Ausführungsbeispielen unter Bezugnahme auf die Zeichnung näher erläutert. Es zeigen:
**Fig.1** anhand einer Draufsicht den schematischen Aufbau der Bremsscheibe;
**Fig.2** einen Radialschnitt der in Fig.1 gezeigten Bremsscheibe;
**Fig.3 und 4** anhand von Draufsichten den schematischen Aufbau weiterer Ausführungsformen der Bremsscheibe;
**Fig.5** eine Ausführungsform einer Bremsscheibe, die insbesondere für die Befestigung an einer rechts in der Figur schematisch dargestellten Nabe vorgesehen ist; und
**Fig.6** eine weitere Ausführungsform einer Bremsscheibe, die insbesondere für die Befestigung an einer anderen Art von Nabe vorgesehen ist.

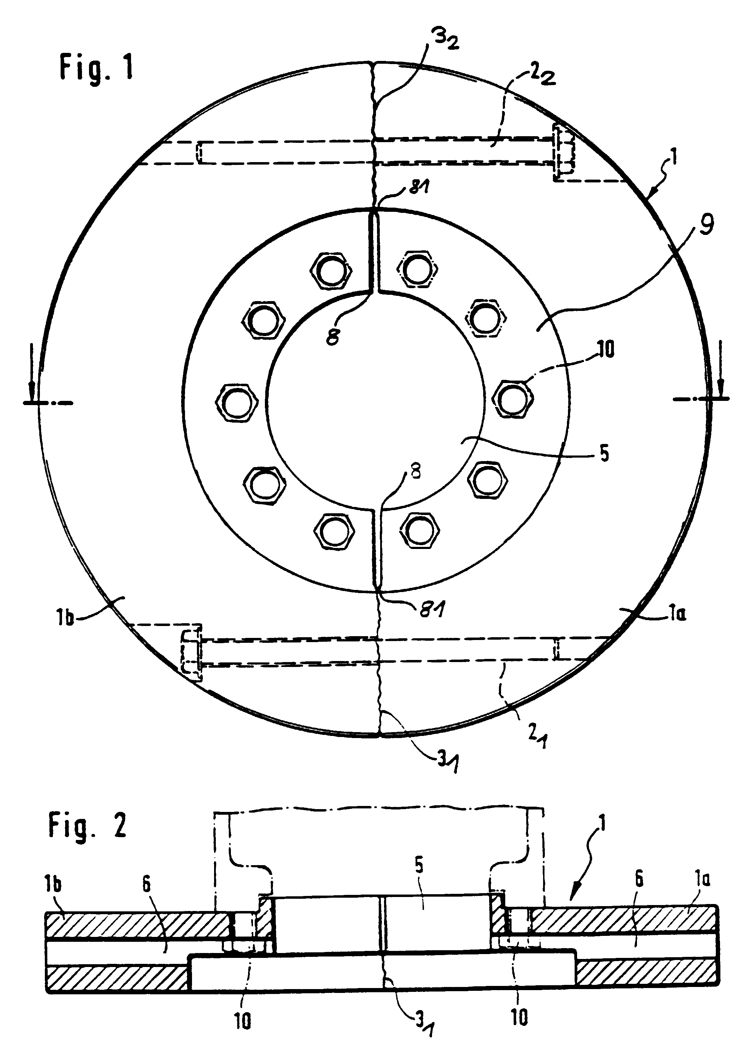

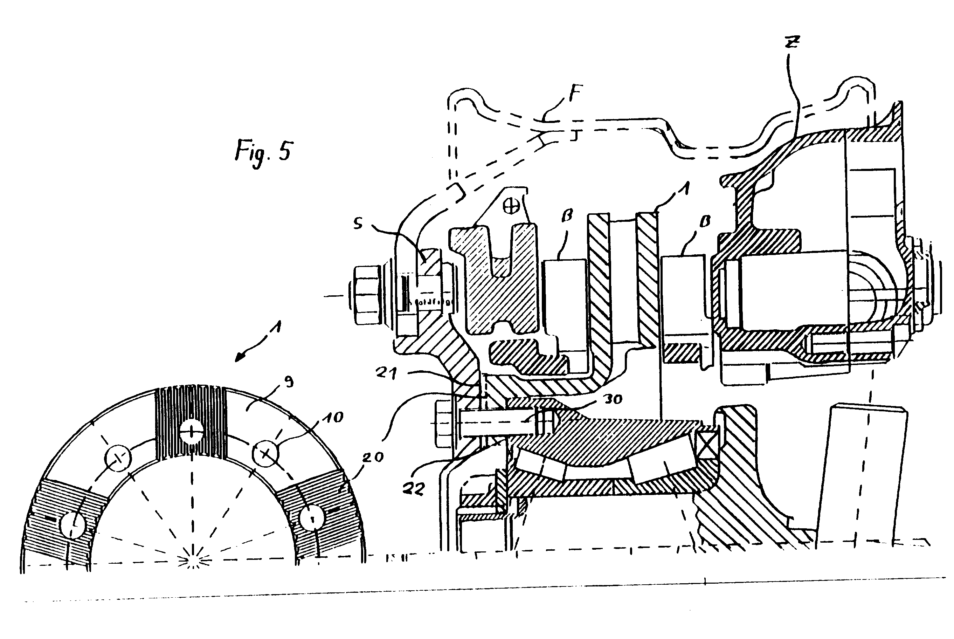

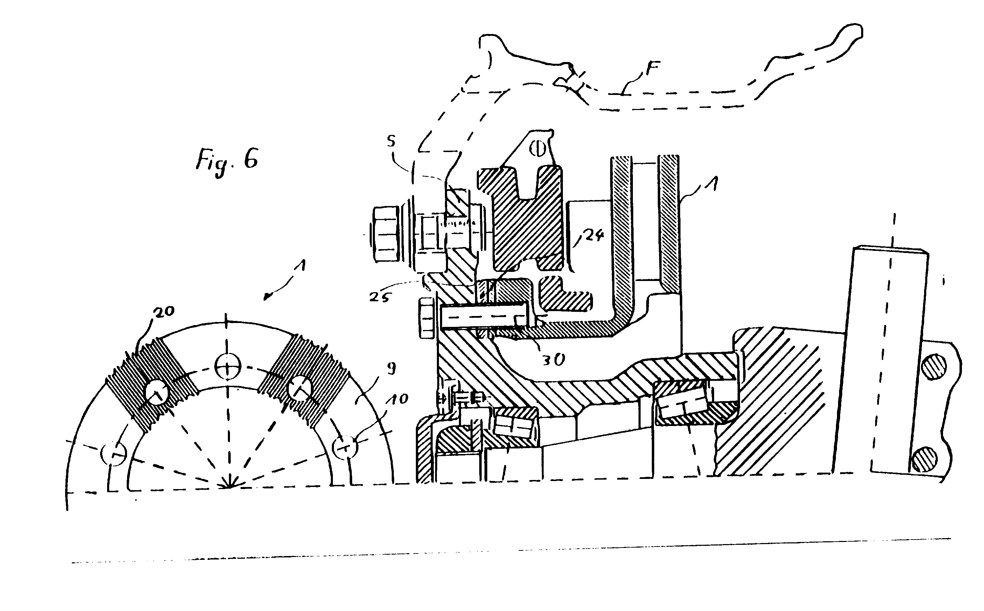

Gemäß Fig.1 wird die erfindungsgemäße Bremsscheibe zunächst durch ein einstückiges Teil 1 gebildet. In dieser Bremsscheibe 1 wird in bekannter Weise eine zentrale Bohrung 5 zur Aufnahme einer Nabe ausgebildet, wobei am Außenumfang der Bohrung 5 mehrere Längsbohrungen 10 mit entsprechendem Innengewinde zur Befestigung der Bremsscheibe 1 an der Nabe ausgebildet werden. Der Außenumfang der Bohrung 5 ist als Anflanschring 9 ausgebildet, der die Befestigung der Bremsscheibe 1 an einer in Fig.2 lediglich schematisch gezeigten Nabe gestattet. Wie aus den Querschnittsansichten der Fig.5 und 6 hervorgeht, kann der Anflanschring 9 jedoch auch im Anschluß an ein Rohr- oder nabenförmiges Zwischenstück ausgebildet sein, das den Anflanschring mit den Kontaktflächen der Bremsscheibe verbindet.

Im peripheren Bereich der Bremsscheibe 1 wird auf jeder Seite eine ringförmige Umfangsfläche beispielsweise durch Drehen ausgebildet; diese Umfangsflächen bilden, gegebenenfalls nach einem zusätzlichen Poliervorgang, die Kontaktflächen, gegen die ein nicht näher gezeigter Bremssattel vermittels einer schematisch in Fig.5 gezeigten Zuspannvorrichtung die Bremsbeläge drückt.

Bis zu diesen Verfahrensschritten entspricht die erfindungsgemäße Bremsscheibe 1 einer herkömmlichen, bislang für Straßen-Nutzfahrzeuge verwendeten Bremsscheibe.

Erfindungsgemäß werden in der auf diese Weise gebildeten Bremsscheibe 1 gemäß der in Fig.1 gezeigten ersten Ausführungsform in Radialrichtung verlaufende, die Bremsscheibe 1 im wesentlichen in zwei halbkreisförmige Teile oder Hälften 1a und 1b unterteilende Trennzonen 3₁ und 3₂ vorgesehen. Innerhalb dieser Trennzonen werden gegebenenfalls, beispielsweise durch eine entsprechende Materialaussparung beim Gießen der Bremsscheibe 1 oder durch nachträgliche Ausbildung einer Nut, Sollbruchstellen geformt. Weiterhin werden in zwei radial gegenüberliegenden Umfangsbereichen der Bremsscheibe 1 zwei tangential und senkrecht zur jeweiligen Trennzone verlaufende Bohrungen 2₁ bzw. 2₂ ausgebildet, die jeweils die betreffende Trennzone übergreifen. Im in den Figuren auf der rechten Seite dargestellten Teil la der Bremsscheibe 1 wird hierbei in der unteren Bohrung ein Innengewinde ausgebildet, während in dem links gezeigten Teil 1b die obere Bohrung mit einem entsprechenden Innengewinde versehen wird. Somit ist es möglich, die beiden Teile 1a und 1b der Bremsscheibe 1 durch zwei lediglich schematisch gezeigte Schrauben unter Vermeidung jeglicher Unwucht miteinander zu verbinden. Selbstverständlich ist es auch möglich, gegebenenfalls weitere Schraubverbindungen dieser Art vorzusehen.

Nach der genannten Ausbildung der Trennzonen 3₁ und 3₂ und der diese übergreifenden Befestigungsvorrichtungen 2₁ und 2₂ wird die Bremsscheibe 1 entlang der Trennzonen 3₁ und 3₂ in die zwei halbkreisförmigen Teile 1a und 1b auseinandergebrochen. Das Auseinanderbrechen der Bremsscheibe 1 wird durch die erwähnte Sollbruchstelle erleichtert; eine zusätzliche Unterkühlung der Bremsscheibe 1 führt zu noch besseren Resultaten beim Auseinanderbrechen der Bremsscheibe 1. Insbesondere wird das Korngefüge am Stoß hierdurch optimiert, so daß die Stoßflächen hervorragend aneinanderpassen.

Die Endfertigung der Bremsscheibe 1, wie insbesondere das Polieren der Brems-Kontaktflächen oder auch die Fertigung der Bohrungen 10 für die Befestigung an der Radnabe, kann sowohl vor als auch nach dem Brechen der Bremsscheibe 1 erfolgen.

Wie aus dem Radialschnitt der Fig.2 zu erkennen ist, kann die Bremsscheibe 1 als innenbelüftete Bremsscheibe ausgebildet sein, die in bekannter Weise geformte Lüftungsöffnungen 6 aufweist. Auch bei derartigen Lüftungsöffnungen ist die Ausbildung der Bohrungen für die Schraubverbindungen 2₁ und 2₂ problemlos möglich.

Aus der Draufsicht der Fig.1 bzw. der Fig.3 und 4 ist ferner zu erkennen, daß im Anflanschring 9 ausgehend von der mit dem Bezugszeichen 81 bezeichneten Stelle, an der die jeweilige Trennzone 3₁ bzw 3₂ auftrifft, bis zum Innenrand des Anflanschrings 9 eine Ausnehmung 8 ausgebildet ist. Eine derartige Ausnehmung kann das Brechen der Bremsscheibe ggf. beträchlich vereinfachen, zumal der Anflanschring 9, wie aus den Fig.5 und 6 hervorgeht, meist über ein nabenförmiges Anschlußstück mit den Kontaktflächen der Bremsscheibe verbunden ist.

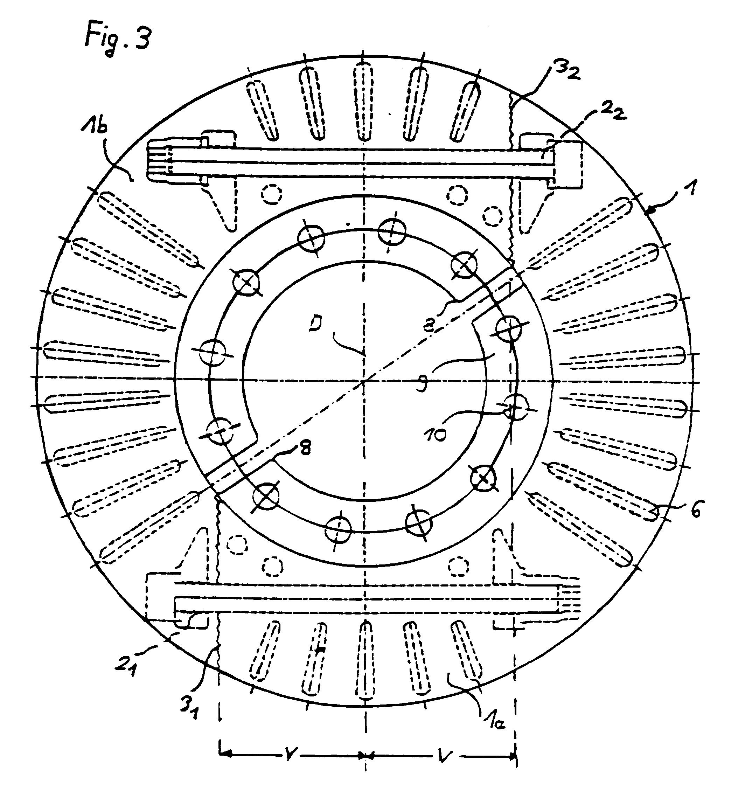

Nachfolgend wird unter Bezugnahme auf Fig.3, die anhand einer Draufsicht eine der in Fig.1 gezeigten Bremsscheibe weitgehend ähnliche Bremsscheibe 1 zeigt, eine Variante des erfindungsgemäßen Herstellungsverfahrens näher erläutert. Gemäß Fig.3 unterscheidet sich diese Variante des Herstellungsverfahrens von dem anhand der Fig.1 erläuterten Herstellungsverfahren dadurch, daß die beiden Trennzonen 3₁ und 3₂ nicht auf der Durchmesserlinie der Bremsscheibe 1 liegen, d.h. diametral gegenüberliegend angeordnet sind, sondern vielmehr unter gegenseitigem Versatz parallel zueinander angeordnet sind. Die Trennzone 3₁ ist demnach parallel zu der mit D bezeichneten Durchmesserlinie der Bremsscheibe 1 angeordnet, und zwar unter einem mit V bezeichneten Abstand; in gleicher Weise ist die andere Trennzone 3₂ unter dem gleichen Abstand V parallel zur Durchmesserlinie D angeordnet. Somit haben die beiden Trennzonen 3₁ und 3₂ einen gegenseitigen Versatz von 2V. Als Folge hiervon werden zwei Bremsscheibenteile la und 1b gebildet, die zwar im wesentlichen gleich groß sind, deren jeweilige Trennzonen sich jedoch nicht auf der Durchmesserlinie der Bremsscheibe 1 befinden, wie dies aus der Draufsicht der Fig.3 unmittelbar ersichtlich ist.

Durch diesen Versatz der beiden Trennzonen 3₁ und 3₂ wird erreicht, daß der Schwerpunkt jedes einzelnen Bremsscheibenteils 1a bzw. 1b so gegen die in der betreffenden Trennzone ausgebildete Bruchebene einwirkt, daß ein großer Teil der Fliehkräfte von der Verzahnung der Bruchstruktur der Bruchebene aufgenommen werden kann. Durch diesen Effekt wird erreicht, daß die lediglich schematisch gezeigten Schrauben der Befestigungsvorrichtung 2₁ bzw. 2₂ deutlich von der Fliehkraftbeanspruchung entlastet werden. Hierdurch ist es möglich, die Befestigungsvorrichtungen 2₁ und 2₂ bzw. deren Schrauben entsprechend schwächer zu dimensionieren. Diese Maßnahme wirkt sich somit positiv auf die Herstellungskosten aus und hat darüberhinaus den Vorteil, daß weniger Einbauplatz für die Schraubverbindung erforderlich ist.

Wie auch bei dem anhand der Fig.1 erläuterten Herstellungsverfahren werden auch bei dieser Variante im Anflanschring 9 zwei Ausnehmungen 8 ausgebildet, die von demjenigen Punkt, an dem die betreffende Trennzone 3₁ bzw. 3₂ in den Anflanschring 9 mündet, bis zum Innenrand des Anflanschrings 9 verlaufen, und zwar im wesentlichen in radialer Richtung. Wie bereits oben erläutert, ist es aufgrund dieser Maßnahme ausreichend, lediglich den außen liegenden, die Kontaktflächen tragenden Bereich der Bremsscheibe 1 zu brechen. Somit wird die Herstellung der erfindungsgemäßen Bremsscheibe 1 entsprechend vereinfacht.

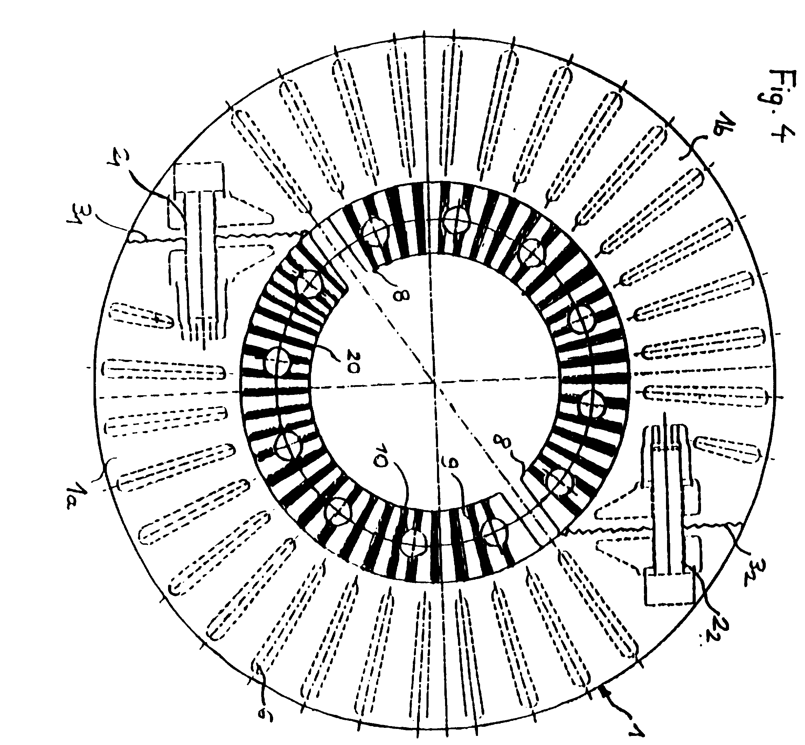

Fig.4 zeigt ein gegenüber dem Herstellungsverfahren der Fig.3 abgewandeltes Verfahren, bei dem die beiden Befestigungsvorrichtungen 2₁ und 2₂ nicht wie in den vorhergehenden Ausführungsbeispielen symmetrisch zur Durchmesserlinie D, sondern vielmehr in etwa symmetrisch zur Trennzone 3₁ bzw. 3₂ angeordnet sind. Diese Maßnahme erlaubt es, die Schraubverbindungen wesentlich kürzer zu gestalten, was sich positiv auf das Gesamtgewicht der Bremsscheibe 1 auswirkt. Darüberhinaus verringern sich die Kosten für die Schrauben entsprechend.

In der Ausführungsform der Fig.4 ist ein weiteres, wesentliches Merkmal der vorliegenden Erfindung dargestellt. Im Falle dieser Bremsscheibe sind nämlich im Anflanschring 9 Formschlußelemente in Form einer Stirnverzahnung 20 vorgesehen. In der jeweils zugeordneten Befestigungsfläche einer Nabe ist eine entsprechend spiegelbildlich ausgebildete Stirnverzahnung vorgesehen, so daß die Bremsscheibe 1 im angeflanschten Zustand mit dieser Gegenverzahnung in Eingriff steht. Durch diese Maßnahme wird erreicht, daß das Bremsmoment nicht wie beim Stand der Technik durch Reibschluß, sondern im wesentlichen durch Formschluß übertragen wird.

Diese Maßnahme gestattet es daher, entweder die Anzahl der zur Befestigung der Bremsscheibe 1 an der Nabe vorgesehenen Schrauben deutlich zu verringern oder alternativ Schrauben mit geringerem Durchmesser zu verwenden. Neben den hierdurch erzielten Gewichts- und Kosteneinsparungen wird somit auch die Montage der Bremsscheibe 1 erleichtert bzw. die Möglichkeit geschaffen, auch bei beengten Einbauverhältnissen eine ausreichend drehmomentfeste Anflanschung zu schaffen.

Die in der Ausführungsform der Fig.4 gezeigte Verzahnung 20 besteht aus gleichmäßig über den Anflanschringen 9 verteilten Zähnen, die sämtlich radial verlaufen, so daß eine sogenannte "Hirtverzahnung" gebildet wird. Es versteht sich, daß eine derartige Verzahnung auch bei den in den Figuren 1 und 3 gezeigten Bremsscheiben zur Erhöhung des übertragbaren Bremsmoments vorgesehen werden kann. Darüberhinaus ist es möglich, eine derartige Verzahnung auch bei ungeteilten Bremsscheiben vorzusehen.

Bei den in den Figuren 5 und 6 gezeigten Bremsscheiben 1 ist eine alternative Ausführungsform der erfindungsgemäßen Verzahnung gezeigt, bei der die Stirnverzahnung 20 aus mehreren, entlang des Umfangs des Anflanschrings 9 gleichmäßig verteilten Verzahnungsbereichen besteht, die vorzugsweise im Bereich einer jeweiligen Befestigungsbohrung 10 des Anflanschrings 9 angeordnet sind. Ein weiterer Unterschied zu der in Fig. 4 gezeigten Hirtverzahnung liegt darin, daß die Zähne innerhalb jedes Verzahnungsbereichs 20 parallel zueinander verlaufen; diese Art der Verzahnung kann gegebenenfalls fertigungstechnische Vorteile aufweisen. Auch diese Art der erfindungsgemäßen Verzahnung 20 kann zur Anflanschung von ungeteilten Bremsscheiben verwendet werden, jedoch werden insbesondere bei den erfindungsgemäßen gebrochenen Bremsscheiben hierdurch Vorteile erzielt.

Anhand der Figuren 5 und 6 sind zwei Möglichkeiten zur Befestigung der erfindungsgemäßen Bremsscheiben dargestellt, die als besonders günstig und wirksam angesehen werden. Die Fig.5 zeigt hierbei eine Nabe, bei der eine zur Befestigung der mit F bezeichneten Felge dienende Radscheibe S lösbar an einer äußeren Stirnseite 22 der Nabe befestigt werden kann. Demgegenüber ist in Fig.6 eine Nabe herkömmlicher Bauart gezeigt, bei der eine zur Befestigung der Felge F dienende Radscheibe S die äußere Stirnseite der Nabe bildet. Im Gegensatz zu der in Fig.5 gezeigten Nabe kann die Bremsscheibe 1 im Falle der Nabe der Ausführungsform der Fig.6 somit nur dann ohne Demontage der Nabe bzw. des Radlagers ausgewechselt werden, wenn entsprechend der Lehre der Erfindung eine gebrochene Bremsscheibe verwendet wird.

In Fig.5 ist rechterhand in einer schematischen Schnittdarstellung der prinzipielle Aufbau einer Radnabe dargestellt. Diese Radnabe trägt eine über Schrauben 30 lösbar befestigte Radscheibe S, an der eine Felge F mit Hilfe von Schrauben befestigt ist. Innerhalb der Felge F rotieren die Kontaktflächen der Bremsscheibe 1, wobei eine Zuspannvorrichtung Z bei Betätigung der Bremse zwei Bremsbacken B gegen jede Kontaktfläche der Bremsscheibe 1 preßt, so daß ein entsprechendes Bremsmoment erzeugt wird. Erfindungsgemäß ist vorgesehen, daß der Anflanschring 9 der Bremsscheibe 1 derart ausgebildet ist, daß die Bremsscheibe 1 zwischen der Radscheibe S und der äußeren Stirnseite 22 der Nabe befestigt werden kann. Hierdurch wird unter anderem erreicht, daß die Schraubverbindung 30 sowohl zur Befestigung der Radscheibe S als auch zur Befestigung der Bremsscheibe 1 verwendet werden kann. Darüberhinaus wird eine besonders kompakte Bauform der Nabe erzielt. Bei dieser Anordnung der Bremsscheibe 1 ist die Stirnverzahnung 20 an der äußeren Seite des Anflanschrings 9 ausgebildet und steht demnach mit einer an einer inneren Ringfläche 21 der Radscheibe S spiegelbildlich ausgebildeten Gegenverzahnung in Eingriff. Aufgrund dieser Maßnahme wird das Bremsmoment der Bremsscheibe 1 besonders wirksam auf die Felge F und damit auf die Bereifung übertragen.

Bei der in Fig.6 gezeigten herkömmlichen Nabe ist der Anflanschring 9 der Bremsscheibe 1, wie aus der rechterhand gezeigten Querschnittsdarstellung unmittelbar hervorgeht, derart geformt, daß die Bremsscheibe 1 über ihre Stirnverzahnung 20 an einer inneren Ringfläche 25 der Radscheibe S befestigt werden kann. Da an dieser inneren Ringfläche 25 der Radscheibe S die Ausbildung einer entsprechenden Gegenverzahnung auf fertigungstechnische Schwierigkeiten stößt, ist erfindungsgemäß ein Zwischenring 24 vorgesehen, an dessen dem Anflanschring 9 zugewandten Fläche die erforderliche Gegenverzahnung ausgebildet ist. Zur Übertragung des Bremsmoments vom Zwischenring 24 zur inneren Ringfläche 25 der Radscheibe S werden in der Fig.6 nicht näher gezeigte Paßelemente verwendet, bei denen es sich beispielsweise um Spannhülsen oder Paßstifte handeln kann. Somit ist eine hervorragende Übertragung des Bremsmoments gewährleistet. Diese Art der erfindungsgemäßen Befestigung der Bremsscheibe hat darüberhinaus den Vorteil, daß keine Bindung an einen bestimmten Lochkreisdurchmesser besteht und die Radkräfte selbst über die Nabe übertragen werden, so daß sich wesentlich kleinere Schraubverbindungen realisieren lassen.

Die anhand der Figuren 5 und 6 erläuterten Montagearten für die Bremsscheibe 1 sind auch für herkömmliche, ungeteilte Bremsscheiben, die vorzugsweise mit der erfindungsgemäßen Verzahnung versehen sein sollten, verwendbar.

## Patentansprüche

1. Verfahren zum Herstellen einer Bremsscheibe (*1*) für eine Scheibenbremse, die insbesondere für Straßen-Nutzfahrzeuge vorgesehen ist und aus zwei im wesentlichen halbringkreisförmigen Teilen *(1a, 1b)* besteht,
*dadurch gekennzeichnet,* daß
- in einer einstückigen, ringscheibenförmigen Bremsscheibe *(1)* zwei Trennzonen *(3*_{*1*}*, 3*_{*2*}*)* vorgesehen werden, welche die Bremsscheibe *(1)* in die zwei halbringkreisförmigen Teile *(1a, 1b)* unterteilen,
- in jeder Trennzone *(3*_{*1*}*, 3*_{*2*}*)* eine diese übergreifende Befestigungsvorrichtung *(2*_{*1*}*, 2*_{*2*}*)* ausgebildet wird, und daß
- die Bremsscheibe (*1*) in den Trennzonen *(3*_{*1*}*, 3*_{*2*}*)* in die zwei halbringkreisförmigenn Teile *(1a, 1b)* auseinandergebrochen wird.

2. Verfahren nach Anspruch 1, *dadurch gekennzeichnet,* daß innerhalb jeder Trennzone *(3*_{*1*}*, 3*_{*2*}*)* eine Sollbruchstelle ausgebildet wird.

3. Verfahren nach Anspruch 1 oder 2, *dadurch gekennzeichnet,* daß die Bremsscheibe *(1)* im unterkühlten Zustand gebrochen wird.

4. Verfahren nach einem der Ansprüche 1 bis 3, *dadurch gekennzeichnet,* daß jede Befestigungsvorrichtung *(2*_{*1*}*, 2*_{*2*}*)* durch mindestens eine senkrecht zur betreffenden Trennzone *(3*_{*1*}*, 3*_{*2*}*)* verlaufende Bohrung mit Innengewinde für eine Schraubverbindung gebildet wird, die der jeweils anderen Befestigungsvorrichtung *(2*_{*1*}*, 2*_{*2*}*)* radial gegenüberliegt und tangential zu dieser verläuft.

5. Verfahren nach einem der Ansprüche 1 bis 4, *dadurch gekennzeichnet,* daß die beiden Trennzonen *(3*_{*1*}*, 3*_{*2*}*)* derart einander diametral gegenüberliegend angeordnet werden, daß zwei im wesentlichen gleich große halbringkreisförmige Bremsscheibenteile *(1a, 1b)* gebildet werden.

6. Verfahren nach einem der Ansprüche 1 bis 4, *dadurch gekennzeichnet,* daß die beiden Trennzonen *(3*_{*1*}*, 3*_{*2*}*)* parallel zueinander, jedoch unter gegenseitigem Versatz gegenüberliegend derart angeordnet werden, daß zwei im wesentlichen gleich große Bremsscheibenteile *(1a, 1b)* gebildet werden.

7. Verfahren nach einem der Ansprüche 1 bis 6, *dadurch gekennzeichnet,* daß im zentralen Bereich der Bremsscheibe *(1)* ein Anflanschring *(9)* zum Anflanschen der Bremsscheibe (*1*) an eine Nabe ausgebildet wird.

8. Verfahren nach Anspruch 7, *dadurch gekennzeichnet,* daß im Anflanschring (*9*) von der Stelle, an der eine jeweilige Trennzone *(3*_{*1*}*, 3*_{*2*}*)* auftrifft, bis zum Innenrand des Anflanschrings *(9)* eine Ausnehmung *(8)* ausgebildet wird.

9. Bremsscheibe (*1*) für eine Scheibenbremse, die insbesondere für Straßen-Nutzfahrzeuge vorgesehen ist und aus zwei im wesentlichen halbringkreisförmigen Teilen *(1a, 1b)* gebildet ist, die mittels zweier Befestigungsvorrichtungen (*2*) aneinander befestigbar sind,
*dadurch gekennzeichnet,* daß
die zwei Teile *(1a, 1b)* der Bremsscheibe (*1*) durch Brechen einer einstückig hergestellten Bremsscheibe entlang zweier Trennzonen *(3*_{*1*}*, 3*_{*2*}*)* gebildet sind.

10. Bremsscheibe *(1)* nach Anspruch 9, *dadurch gekennzeichnet,* daß jede Befestigungsvorrichtung *(2*_{*1*}*, 2*_{*2*}*)* mindestens eine senkrecht zur betreffenden Trennzone *(3*_{*1*}*, 3*_{*2*}*)* verlaufende Bohrung mit Innengewinde für eine Schraubverbindung aufweist, die der jeweils anderen Befestigungsvorrichtung *(2*_{*1*}*, 2*_{*2*}*)* radial gegenüberliegt und tangential zu dieser verläuft.

11. Bremsscheibe *(1)* nach Anspruch 9 oder 10, *dadurch gekennzeichnet,* daß die beiden Trennzonen *(3*_{*1*}*, 3*_{*2*}*)* derart einander diametral gegenüberliegend angeordnet sind, daß die zwei Bremsscheibenteile *(1a*, *1b)* im wesentlichen gleich groß und halbringkreisförmig sind (Fig.1).

12. Bremsscheibe *(1)* nach Anspruch 9 oder 10, *dadurch gekennzeichnet,* daß die beiden Trennzonen *(3*_{*1*}*, 3*_{*2*}*)* parallel zueinander, jedoch unter gegenseitigem Versatz gegenüberliegend derart angeordnet sind, daß die zwei Bremsscheibenteile *(1a, 1b)* im wesentlichen gleich groß sind (Fig.3, 4).

13. Bremsscheibe *(1)* nach einem der Ansprüche 9 bis 12, *dadurch gekennzeichnet,* daß die Bremsscheibe *(1)* im zentralen Bereich einen Anflanschring (*9*) zum Anflanschen der Bremsscheibe *(1)* an eine Nabe aufweist.

14. Bremsscheibe *(1)* nach Anspruch 13, *dadurch gekennzeichnet,* daß im Anflanschring (*9*) von der Stelle, an der eine jeweilige Trennzone *(3*_{*1*}*, 3*_{*2*}*)* auftrifft, bis zum Innenrand des Anflanschrings (*9*) eine Ausnehmung (*8*) ausgebildet ist.

15. Bremsscheibe *(1)* für eine Scheibenbremse nach einem der Ansprüche 9 bis 14, *dadurch gekennzeichnet,* daß im Anflanschring (*9*) Formschlußelemente (*20*) ausgebildet sind, die mit einer zugeordneten Befestigungsfläche (*21*) einer Nabe in Eingriff stehen.

16. Bremsscheibe (*1*) nach Anspruch 15, *dadurch gekennzeichnet,* daß für die Formschlußelemente eine im wesentlichen radial verlaufende Stirnverzahnung *(20)* im Anflanschring (*9*) ausgebildet ist, die mit einer entsprechenden Gegenverzahnung *(21)* der Befestigungsfläche *(21)* in Eingriff steht.

17. Bremsscheibe *(1)* nach Anspruch 16, *dadurch gekennzeichnet,* daß die Stirnverzahnung *(20)* aus mehreren, entlang des Umfangs des Anflanschrings (*9*) gleichmäßig verteilten Verzahnungsbereichen besteht, die vorzugsweise im Bereich einer jeweiligen Befestigungsbohrung *(10)* des Anflanschrings *(9)* angeordnet sind.

18. Bremsscheibe *(1)* nach Anspruch 17, *dadurch gekennzeichnet,* daß die Zähne innerhalb jedes Verzahnungsbereichs *(20)* parallel zueinander verlaufen.

19. Bremsscheibe (*1*) nach einem der Ansprüche 15 bis 18, zur Befestigung an eine Nabe, bei der eine zur Befestigung der Felge *(F)* dienende Radscheibe *(S)* lösbar an einer äußeren Stirnseite (*22*) der Nabe befestigbar ist, *dadurch gekennzeichnet,* daß der Anflanschring *(9)* der Bremsscheibe *(1)* derart ausgebildet ist, daß die Bremsscheibe *(1)* zwischen der Radscheibe *(S)* und der äußeren Stirnseite (*22*) der Nabe befestigbar ist.

20. Bremsscheibe *(1)* nach Anspruch 19, *dadurch gekennzeichnet,* daß die Stirnverzahnung *(20)* an der äußeren Seite des Anflanschrings (*9*) ausgebildet ist und mit einer an einer inneren Ringfläche *(21)* der Radscheibe *(S)* spiegelbildlich ausgebildeten Gegenverzahnung in Eingriff steht.

21. Bremsscheibe (*1*) nach einem der Ansprüche 15 bis 18, zur Befestigung an eine Nabe, bei der eine zur Befestigung der Felge *(F)* dienende Radscheibe *(S)* die äußere Stirnseite der Nabe bildet, *dadurch gekennzeichnet,* daß der Anflanschring (*9*) der Bremsscheibe (*1*) derart ausgebildet ist, daß die Bremsscheibe (*1*) über die Stirnverzahnung *(20)* an einer inneren Ringfläche *(25)* der Radscheibe *(S)* befestigbar ist.

22. Bremsscheibe (*1*) nach Anspruch 21, *dadurch gekennzeichnet,* daß zwischen dem Anflanschring (*9*) der Bremsscheibe *(1)* und der inneren Ringfläche *(25)* der Radscheibe *(S)* ein Zwischenring (24) angeordnet ist.

23. Bremsscheibe *(1)* nach Anspruch 22, *dadurch gekennzeichnet,* daß die beidseitigen Verzahnungen zwischen dem Anflanschring (*9*) der Bremsscheibe (*1*) und dem Zwischenring (*24*) vorgesehen sind.

24. Bremsscheibe *(1)* nach Anspruch 23, *dadurch gekennzeichnet,* daß der Zwischenring *(24)* über Paßelemente, vorzugsweise in Form von Spannhülsen oder Paßstiften, mit der inneren Ringfläche *(25)* der Radscheibe *(S)* verbunden ist.

## Claims

1. Process for producing a brake disc (1) for a disc brake, intended particularly for commercial road vehicles, consisting of two essentially semi-annular components (1a, 1b),
*characterised in that*
- two partition zones (3₁, 3₂) are provided in a single-piece, annular-shaped brake disc (1), which divide the brake disc (1) into two semi-annular components (1a, 1b),
- in each partition zone (3₁, 3₂) is formed an overlapping fixing means (2₁, 2₂),
*and that*
- the brake disc (1) is broken apart in the partition zones (3₁, 3₂) into the two semi-annular components (1a, 1b).

2. Process according to Claim 1, *characterised in that,* within each partition zone (3₁, 3₂) is formed a rated braking point.

3. Process according to Claim 1 or 2, *characterised in that* the brake disc (1) is parted in a supercooled condition.

4. Process according to one of Claims 1 to 3, *characterised in that* each fixing means (2₁, 2₂) is formed by at least one hole running perpendicular to the partition zone concerned (3₁, 3₂) and having a female thread for a screw fastener, is radially opposite the other fixing means (2₁, 2₂) and runs tangential to this.

5. Process according to one of Claims 1 to 4, *characterised in that* the two partition zones (3₁, 3₂) are arranged diametrically opposite to each other such that two semi-annular brake disc components (1a, 1b) are formed which are essentially the same size.

6. Process according to one of Claims 1 to 4, *characterised in that* the two partition zones (3₁, 3₂) are arranged parallel to each other, but opposed with a mutual offset such that two brake disc components (1a, 1b) are formed which are essentially the same size.

7. Process according to one of Claims 1 to 6, *characterised in that,* in the central area of the brake disc (1) is formed a flanging ring (9) for flanging the brake disc (1) to a hub.

8. Process according to Claim 7, *characterised in that,* formed in the flanging ring (9) is a recess (8) from the juncture with the respective partition zone (3₁, 3₂) to the inside edge of the flanging ring (9).

9. Brake disc (1) for a disc brake which is intended particularly for commercial road vehicles and is formed from two essentially semi-annular components (1a, 1b) which are connected to each other by means of two fixing means (2),
*characterised in that*
the two components (1a, 1b) of the brake disc (1) are formed by breaking a brake disc, manufactured as a single piece, along two partition zones (3₁, 3₂).

10. Brake disc (1) according to Claim 9, *characterised in that* each fixing means (2₁, 2₂) exhibits at least one hole running perpendicular to the partition zone concerned (3₁, 3₂) and having a female thread for a screw fastener, is radially opposite the other fixing means (2₁, 2₂) and runs tangential to this.

11. Brake disc (1) according to Claim 9 or 10, *characterised in that* the two partition zones (3₁, 3₂) are arranged diametrically opposite to each other such that two brake disc components (1a, 1b) are formed which are essentially the same size and semi-annular (Fig. 1).

12. Brake disc (1) according to Claim 9 or 10, *characterised in that* the two partition zones (3₁, 3₂) are arranged parallel to each other, but opposed with a mutual offset such that two brake disc components (1a, 1b) are formed which are essentially the same size (Fig. 3, 4).

13. Brake disc (1) according to one of Claims 9 to 12, *characterised in that,* in the central area of the brake disc (1) features a flanging ring (9) for flanging the brake disc (1) to a hub.

14. Brake disc (1) according to Claim 13, *characterised in that,* formed in the flanging ring (9) is a recess (8) from the juncture with the respective partition zone (3₁, 3₂) to the inside edge of the flanging ring (9).

15. Brake disc (1) for a disc brake according to one of Claims 9 to 14, *characterised in that* positive locking elements (20) are formed in the flanging ring (9) which engage with an assigned fixing area (21) of a hub.

16. Brake disc (1) according to Claim 15, *characterised in that* an essentially radially configured end face serration (20) is formed in the flanging ring (9) to provide the positive locking elements, which serration (20) engages with a corresponding mating serration (21) in the fixing area (21).

17. Brake disc (1) according to Claim 16, *characterised in that* the end face serration (20) consists of several serration zones evenly distributed around the circumference of the flanging ring (9), which serration zones being preferably arranged in the area of a respective fixing hole (10) in the flanging ring (9).

18. Brake disc (1) according to Claim 17, *characterised in that* the teeth run parallel to one another within each serration zone (20).

19. Brake disc (1) according to one of Claims 15 to 18, for fixing to a hub in which a wheel disc (S) provided for the fixing of the wheel rim (F) is attached to, and detachable from, an outer end face (22) of the hub, *characterised in that* the flanging ring (9) of the brake disc (1) is formed such that the brake disc (1) can be mounted between the wheel disc (S) and the outer end face (22) of the hub.

20. Brake disc (1) according to Claim 19, *characterised in that* the end face serration (20) is formed on the outer face of the flanging ring (9) and engages with a mating serration of mirror formation on an inner annular face (21) of the wheel disc (S).

21. Brake disc (1) according to one Claims 15 to 18, for mounting on a hub in which a wheel disc (S) provided for fixing the rim (F) forms the outer end face of the hub, *characterised in that* the flanging ring (9) of the brake disc (1) is formed such that the brake disc (1) can be mounted via the end face serration (20) on an inner annular surface (25) of the wheel disc (S).

22. Brake disc (1) according to Claim 21, *characterised in that,* arranged between the flanging ring (9) of the brake disc (1) and the inner annular surface (25) of the wheel disc (S) is an intermediate ring (24).

23. Brake disc (1) according to Claim 22, *characterised in that* the mating serrations are located at the flanging ring (9) of the brake disc (1) and the intermediate ring (24).

24. Brake disc (1) according to Claim 23, *characterised in that* the intermediate ring (24) is connected to the inner annular surface (25) of the wheel disc (S) by fixing elements, preferably in the form of roll pins or dowel pins.

## Revendications

1. Procédé pour fabriquer un disque (1) de frein pour un frein à disque, qui est prévu notamment pour des véhicules utilitaires routiers et qui est constitué de deux parties (1a, 1b) en forme de demi-anneaux circulaires, caractérisé en ce que
- deux zones (3₁, 3₂) de séparation sont prévues dans un disque (1) de frein en forme de disque annulaire d'une pièce, qui divisent le disque (1) de frein en les deux parties (1a, 1b) en forme de demi-anneaux circulaires,
- il est formé dans chaque zone (3₁, 3₂) de séparation, un dispositif (2₁, 2₂) de fixation, qui empiète dans celle-ci, et
- le disque (1) de frein est rompu en les deux parties (1a, 1b) en forme de demi-anneaux circulaires dans les zones (3₁, 3₂) de séparation.

2. Procédé suivant la revendication 1, caractérisé en ce qu'il est formé à l'intérieur de chaque zone (3₁, 3₂) de séparation un point de rupture de consigne.

3. Procédé suivant la revendication 1 ou 2, caractérisé en ce que le disque (1) de frein est rompu à l'état surfondu.

4. Procédé suivant l'une des revendications 1 à 3, caractérisé en ce que chaque dispositif (2₁, 2₂) de fixation est formé par au moins un trou, s'étendant perpendiculairement à la zone (3₁, 3₂) de séparation concernée et muni d'un taraudage intérieur pour un assemblage par vissage, qui est opposé radialement à l'autre dispositif (2₁, 2₂) de fixation et s'étend tangentiellement à celui-ci.

5. Procédé suivant l'une des revendications 1 à 4, caractérisé en ce que les deux zones (3₁, 3₂) de séparation sont disposées diamétralement opposées l'une à l'autre de sorte que soient formées deux parties (1a, 1b) de disque de frein en forme de demi-anneaux circulaires de grandeurs sensiblement égales.

6. Procédé suivant l'une des revendications 1 à 4, caractérisé en ce que les deux zones (3₁, 3₂) de séparation sont disposées parallèlement l'une à l'autre, cependant en étant mutuellement décalées, de sorte que deux parties (1a, 1b) de disque de frein de grandeurs sensiblement égales soient formées.

7. Procédé suivant l'une des revendications 1 à 6, caractérisé en ce que dans la région centrale du disque (1) de frein, il est formé un anneau (9) de bride pour brider le disque (1) de frein à un moyeu.

8. Procédé suivant la revendication 7, caractérisé en ce qu'il est formé dans l'anneau (9) de bride un évidement (8) du point où il rencontre sa zone (3₁, 3₂) de séparation associée jusqu'au bord intérieur de l'anneau (9) de bride.

9. Disque (1) de frein pour un frein à disque, qui est prévu notamment pour un véhicule utilitaire routier et est constitué de deux parties (1a, 1b) en forme de demi-anneaux circulaires, qui peuvent être fixées l'une à l'autre au moyen de deux dispositifs (2) de fixation, caractérisé en ce que
les deux parties (1a, 1b) du disque (1) de frein sont formées par rupture d'un disque de frein, fabriqué d'une pièce, le long de deux zones (3₁, 3₂) de séparation.

10. Disque (1) de frein suivant la revendication 9, caractérisé en ce que chaque dispositif (2₁, 2₂) de fixation comporte au moins un trou s'étendant perpendiculairement à la zone (3₁, 3₂) de séparation concernée et comportant un taraudage intérieur pour un assemblage par vissage, qui est opposé radialement à l'autre dispositif (2₁, 2₂) de fixation et s'étend tangentiellement à celui-ci.

11. Disque (1) de frein suivant la revendication 9 ou 10, caractérisé en ce que les deux zones (3₁, 3₂) de séparation sont disposées diamétralement opposées de sorte que les deux parties (1a, 1b) de disque de frein soient en forme de demi-anneaux circulaires de grandeurs sensiblement égales (figure 1).

12. Disque (1) de frein suivant la revendication 9 ou 10, caractérisé en ce que les deux zones (3₁, 3₂) de séparation sont disposées parallèlement mais en étant mutuellement décalées, de sorte que les deux parties (1a, 1b) de disque de frein soient sensiblement de grandeurs égales (figures 3, 4).

13. Disque (1) de frein suivant l'une des revendications 9 à 12, caractérisé en ce que le disque de frein comporte dans la région centrale un anneau (9) de bride pour brider le disque (1) de frein à un moyeu.

14. Disque (1) de frein suivant la revendication 13, caractérisé en ce qu'il est formé un évidement (8) dans l'anneau (9) de bride du point où il rencontre une zone (3₁, 3₂) de séparation respective jusqu'au bord intérieur de l'anneau (9) de bride.

15. Disque (1) de frein pour un frein à disque suivant l'une des revendications 9 à 14, caractérisé en ce qu'il est formé dans l'anneau (9) de bride des éléments (20) de fermeture par complémentarité de forme, qui sont en contact avec une surface (21) de fixation associée d'un moyeu.

16. Disque (1) de frein suivant la revendication 15, caractérisé en ce qu'il est formé dans l'anneau (5) de bride, pour les éléments (20) de fermeture par complémentarité de forme, une denture (20) frontale qui s'étend sensiblement radialement et qui vient en prise avec une denture (21) antagoniste correspondante de la surface (21) de fixation.

17. Disque (1) de frein suivant la revendication 16, caractérisé en ce que la denture (20) frontale est constituée de plusieurs zones de dentures réparties uniformément le long de la périphérie de l'anneau (9) de bride, ces zones étant disposées de préférence dans la région d'un trou (10) de fixation respectif de l'anneau (9) de bride.

18. Disque (1) de frein suivant la revendication 17, caractérisé en ce que les dents à l'intérieur de chaque zone (20) de denture s'étendent parallèlement les unes aux autres.

19. Disque (1) de frein suivant l'une des revendications 15 à 18, caractérisé en ce que pour la fixation à un moyeu, dans lequel un disque (S) de roue servant à la fixation de la jante (F) peut être fixé de manière amovible à un côté (22) frontal extérieur du moyeu, caractérisé en ce que l'anneau (9) de bride du disque (1) de frein est formé de sorte que le disque (1) de frein peut être fixé entre le disque (S) de roue et le côté (22) frontal extérieur du moyeu.

20. Disque (1) de frein suivant la revendication 19, caractérisé en ce que la denture (20) frontale est formée du côté extérieur de l'anneau (9) de bride et vient en contact avec une denture antagoniste symétrique comme en un miroir de la denture et formée sur une face (21) d'anneau intérieure du disque (S) de roue.

21. Disque (1) de frein suivant l'une des revendications 15 à 18, pour la fixation à un moyeu, dans lequel un disque (S) de roue servant à la fixation de la jante (F) forme le côté frontal antérieur du moyeu, caractérisé en ce que l'anneau (9) de bride du disque (1) de frein est formé de sorte que le disque (1) de frein peut être fixé par l'intermédiaire de la denture (20) frontale à une face (25) d'anneau intérieure du disque (S) de roue.

22. Disque (1) de frein suivant la revendication 21, caractérisé en ce qu'entre l'anneau (9) de bride du disque (1) de frein et la face (25) d'anneau intérieure du disque (S) de roue est disposé un anneau (24) intermédiaire.

23. Disque (1) de frein suivant la revendication 22, caractérisé en ce que les dentures des deux côtés sont prévues entre l'anneau (9) de bride du disque (1) de frein et l'anneau (24) intermédiaire.

24. Disque (1) de frein suivant la revendication 23, caractérisé en ce que l'anneau (24) intermédiaire est relié, par l'intermédiaire d'éléments d'ajustage, de préférence sous la forme de douilles de blocage ou de goujons d'ajustage, à la face (25) d'anneau intérieure du disque (S) de roue.
